## Europäisches Patentamt

## European Patent Office

## Office européen des brevets

(19)

(11) Veröffentlichungsnummer: **0 111 177**
**B1**

(12) # EUROPÄISCHE PATENTSCHRIFT

(45) Veröffentlichungstag der Patentschrift:
28.01.87

(51) Int. Cl.⁴: **B 60 B 3/14**

(21) Anmeldenummer: **83111313.9**

(22) Anmeldetag: **12.11.83**

(54) **Felgenrad, insbesondere Scheibenfelgenrad für Kraftfahrzeuge.**

(30) Priorität: **13.11.82 DE 8231980 U**

(43) Veröffentlichungstag der Anmeldung:
**20.06.84 Patentblatt 84/25**

(45) Bekanntmachung des Hinweises auf die Patenterteilung:
**28.01.87 Patentblatt 87/5**

(84) Benannte Vertragsstaaten:
**AT BE CH DE FR GB IT LI LU NL SE**

(56) Entgegenhaltungen:
**CH - A - 305 600**
**DE - A - 2 230 251**
**GB - A - 859 193**
**US - A - 2 969 256**
**US - A - 3 006 443**
**US - A - 3 329 468**
**US - A - 3 361 482**
**US - A - 3 428 365**
**US - A - 3 869 174**
**US - A - 3 988 038**
**US - A - 4 165 904**

(73) Patentinhaber: **Wipperfürth, Dieter, Hallesche Strasse 10, D-6800 Mannheim 31 (DE)**

(72) Erfinder: **Wipperfürth, Dieter, Hallesche Strasse 10, D-6800 Mannheim 31 (DE)**

(74) Vertreter: **Ratzel, Gerhard, Dr., Seckenheimer Strasse 36a, D-6800 Mannheim 1 (DE)**

### Beschreibung

Die Erfindung betrifft ein Felgenrad, insbesondere ein Scheibenfelgenrad für Kraftfahrzeuge mit einer Radscheibe, die eine zentrale Nabenbohrung und auf einem Lochkreis angeordnete Ausnehmungen aufweist, und mit in den Ausnehmungen eingesetzten Büchsen, die jeweils eine Radbolzenbohrung aufweisen und die mit an einem Halsteil sowie an einem erweiterten Büchsensitz angeordneten Anlageflächen an Flächen der Ausnehmungen formschlüssig anliegen, wobei die erweiterten Büchsensitze an der Aussenseite, an welcher die Radbolzenmuttern oder dergleichen angeordnet werden, der Radscheibe angeordnet sind.

Aus der US-A-33 29 468 ist ein derartiges Felgenrad bekannt. Die Ausnehmungen sind bei einer Ausführungsvariante oval oder als Langlöcher ausgebildet, in welche die Büchsen, welche ebenfalls einen ovalen oder langgestreckten Querschnitt aufweisen, eingesetzt sind. Entsprechend dem jeweils geforderten Lochkreisdurchmesser befindet sich die Radbolzenbohrung im Bereich der Mitte oder aber in Richtung zu der einen oder anderen Längsseite der Büchse. Für den jeweiligen Lochkreisdurchmesser sind unterschiedliche Büchsen erforderlich, wodurch ein nicht unerheblicher Herstellungs- und Lagerhaltungsaufwand notwenig wird. Die Fertigung der ovalen oder länglichen Büchsen und ebenso auch der entsprechend ausgebildeten Ausnehmungen erfordert gerade im Hinblick auf eine Grosserienfertigung einen nicht unerheblichen Aufwand. In einer weiteren Ausführungsvariante des vorbekannten Felgenrades sind die Büchsen als kreisförmige Scheiben ausgebildet, die in entsprechenden Ansenkungen bzw. Öffnungen der Radscheibe angeordnet sind. Die Radbolzenbohrung ist hierbei exzentrisch zur Mitte der Scheibe angeordnet. Es besteht die Gefahr, dass die Scheiben während des Betriebes sich verdrehen und somit die Felge nicht hinreichend sicher zentriert ist. Die Scheiben sind nämlich in den Ausnehmungen bzw. Bohrungen tangential wirkenden Kräften ausgesetzt, die zu einem Verdrehen der Scheibe führen und im Ergebnis eine Dezentrierung der Felge auf der Radnabe verursachen. Ferner trifft bei diesen Scheiben derart ein Kippmoment auf, dass sich die Scheibe auf der Seite, auf welcher die exzentrische Radbolzenbohrung angeordnet ist, in die in der Regel aus Aluminium gefertigte Felge sich einarbeitet. Es liegt auf der kürzeren Seite der Scheibe praktisch der gesamte Druck des Radbolzens; durch das Einarbeiten in die Felge ist schon nach relativ kurzer Betriebsdauer die Gefahr einer Lockerung des Radbolzens zu befürchten. Auch bei verschleissfesten Materialien für die Scheiben und exakt aufeinander abgestimmten Passungen lassen sich derartige Probleme in der Praxis kaum überwinden.

Ferner ist aus der US-A-29 69 256 ein Felgenrad bekannt, in dessen Nabenbohrung Zentriermittel vorgesehen sind. Diese Zentriermittel sind als Ringe ausgebildet, die mit der Nabe, also nicht mit der Felge, fest verbunden sind. Die Nabe wird mit derartigen Ringen auf die unterschiedlichen Durchmesser der Nabenbohrung der Felge angepasst. Die hierbei notwendigen Arbeiten zum Befestigen der Ringe auf der Nabe erfordern einen relativ grossen Aufwand, wobei es nachträglich schwierig sein wird, eine andere Felge mit der Nabe zu verbinden.

Der Erfindung liegt daher die Aufgabe zugrunde, die Felge der eingangs genannten Art mit geringem konstruktivem Aufwand dahingehend weiterzubilden, dass einerseits die Zentrierung auch über eine lange Lebensdauer gewährleistet wird und andererseits mit geringem Fertigungsaufwand die Anpassung an unterschiedliche Lochkreisdurchmesser ermöglicht wird.

Die Lösung dieser Aufgabe ist dadurch gekennzeichnet, dass die Anlageflächen vom Halsteil und Büchsensitz jeweils rotationssymmetrisch bezüglich einer durch die Büchsenmitte verlaufenden Achse derart ausgebildet sind, dass die Büchsen in den als Bohrungen ausgebildeten Ausnehmungen drehbar sind, dass die Radbolzenbohrung exzentrisch zu der genannten Achse angeordnet ist, wobei das Halsteil mit dem Bereich der Anlagefläche, welcher bezüglich der Achse auf der anderen Seite als die Radbolzenbohrung liegt, an der Fläche der Bohrung abgestützt wird, und dass in der Nabenbohrung ein mit der Radscheibe verbundenes Zentriermittel vorgesehen ist.

Das erfindungsgemässe Felgenrad zeichnet sich durch eine einfache Konstruktion aus und ermöglicht mit geringem Aufwand die Anpassung an den jeweils gewünschten Lochkreisdurchmesser. Die mit dem Felgenrad verbundenen Zentriermittel gewährleisten eine einwandfreie Zentrierung, ohne dass hierbei an der Nabe irgendwelche Änderungen notwendig sind. Dies ist auch wichtig im Hinblick auf die einfache Montage der Felge, damit die grundsätzlich in den Ausnehmungen bzw. Bohrungen verdrehbaren Büchsen beim Anziehen der Radbolzenmuttern ihre korrekte Stellung behalten. Das aufgrund der exzentrischen Anordnung der Radbolzenbohrung in der Hülse bedingte Kippmoment wird durch den auf der bezüglich der Achse gegenüberliegenden Bereich der Anlagefläche des Halsteils erfindungsgemäss abgefangen. Das Halsteil bildet somit einen Teil eines zweiteiligen Hebels, dessen Drehpunkt etwa im äusseren Teil der Büchse sich befindet. Aufgrund der Abstützung wird stets eine zur Bohrung fluchtende Ausrichtung der Büchse gewährleistet und ein Kippen wird unterbunden. Infolgedessen wird der Büchsensitz im Bereich der exzentrisch angeordneten Radbolzenbohrung entlastet mit der Folge, dass die von dem Radbolzen bzw. der Radbolzenmutter eingeleitete Kraft praktisch auf den gesamten Büchsensitz verteilt wird. Eine formschlüssige und insbesondere flächige Auflage wird gewährleistet, ohne dass punktartige Überlastungen zu befürchten sind. Ein Einarbeiten der Büchse wird wirksam verhindert. Das Verdrehen der Büchsen in den Büchsenaufnahmebohrungen wird durch die

2

enge Passung mit leichtem Spiel oder leichtem Pressitz behindert. Diese Verdrehsicherung kann noch weiter durch eine Rändelung am meist konischen Teil der Flanschfläche der Büchse verstärkt werden, worauf im folgenden noch einmal hingewiesen werden wird.

Besonders bevorzugt ist, dass die Büchse mit ihrem Halsteil im wesentlichen über die gesamte Länge bzw. Tiefe der Büchsenaufnahmebohrung formschlüssig erstreckt ist. Damit wird die Länge des vorbeschriebenen, zweiseitigen Hebels so gross wie möglich gemacht und die erfindungsgemässe Wirkung dieses Hebels entsprechend verbessert. Damit die Büchse jedoch aus der Büchsenaufnahmebohrung nicht hervorsteht, wird sie in der Regel insbesondere an ihrem Halsteil geringfügig kürzer gewählt, als der gesamten Länge bzw. Tiefe der Büchsenaufnahmebohrung entspricht.

Als Zentriermittel kann in der Nabenbohrung insbesondere ein Innenring angeordnet sein. Der Innenring besitzt dazu dann einen Aussendurchmesser, der dem Innendurchmesser der vorzugsweise maximalen Nabenbohrung entspricht, und einen Innendurchmesser, der der vorgesehenen Nabe entspricht. Dabei ist der Innenring aus der Nabenbohrung herausnehmbar, also in derselben auswechselbar, so dass in einer Felge verschieden bemessene Innenringe zur Anpassung auf die vorgesehene Nabe eingesetzt werden können. Vorzugsweise besitzt die Felge selbst eine Nabenbohrung bzw.-kontur, die der grössten zuordenbaren Nabe des bzw. der Fahrzeuge entspricht. Mit verschiedenen Innenringen wird dann die Nabenbohrung weiter reduziert.

Nach einer bevorzugten Ausführungsform sind die verschiedenen Zentriermittel oder Innenringe zur Vermeidung von Verwechslungen verschiedenfarbig ausgeführt.

Nach einer besonderen Ausführungsform kann der Innenring eine ein- oder mehrfach geschlitzte Mutter bzw. ein ein- oder mehrfach geschlitztes Bauteil in beliebiger Ausführungsform nach dem System einer Spannzange ausgebildet sein, die bzw. das passend in einem sich verengenden Gewinde oder Nuten in der Nabenbohrung angeordnet ist. Dreht man beispielsweise die Mutter in das Gewinde immer tiefer ein, so wird sie im Schlitzbereich zusammengeschoben und somit im Ergebnis ihren Innendurchmesser verringern. Auf diese Weise ist es nicht nur möglich, den Innendurchmesser der Mutter, also den hier befindlichen Teil der Nabenbohrung, auf den Aussendurchmesser der vorgesehenen Nabe anzupassen. Es ist sogar möglich, die Naben in der inneren Bohrung der Mutter förmlich einzuspannen. Auf diese Weise ist eine kompromisslose Zentrierung der Felge auf einer Nabe möglich. Dabei können verschiedene Muttern unterschiedlicher Innendurchmesser Verwendung finden.

Es ist auch ein ähnliches Bauteil möglich, das sich in einer verengenden Nabenbohrung mit verschiedenen Stufen und/oder Rillen einklipsen oder eindrücken lässt, um kleinere Durchmesser der Nabenbohrung zu erreichen.

In einer bevorzugten Ausführungsform besitzt die Felge in der Nabenbohrung eine umlaufende Nut, zu der der Innenring einen passenden Aussenwulst besitzt. Damit wird verhindert, dass sich der Innenring aus der Nabenbohrung herausdrückt. Übrigens besitzt der Innenring einen Schlitz, so dass er an demselben so weit elastisch zusammengedrückt werden kann, dass der Aussendurchmesser seines Aussenwulstes nicht grösser ist als der Innendurchmesser der Nabenbohrung, so dass der Innenring also in dieselbe eingesetzt werden kann. Der Innenring kann dazu aus einem hart-elastischen Kunststoff oder auch Metall bestehen.

Damit die Büchse aus der Büchsenaufnahmebohrung nicht von selbst herausfallen kann, was insbesondere aus Sicherheitsgründen zu vermeiden ist, wird zwischen dem Halsteil der Büchse und der Büchsenaufnahmebohrung ein Haltering angeordnet. Der Haltering kann insbesondere als Gummi-O-Ring ausgebildet sein, der in einer Nut in der Büchse oder der Büchsenaufnahmebohrung leicht überstehend angeordnet ist. Beim Einsetzen der Büchse in die Büchsenaufnahmebohrung wird der Haltering durch seine Elastizität mit einem leichten Hammerschlag auf die Büchse zusammengepresst, so dass die Büchse in der Büchsenaufnahmebohrung gehalten wird. Auch werden die Büchsen in der Büchsenaufnahmebohrung gegen Herausfallen gesichert. Ein Verdrehen der Büchse z.B. mittels eines Imbusschlüssels kann noch erfolgen.

Eine zusätzliche Sicherung der Büchsen gegen ein Verdrehen in den Büchsenaufnahmebohrungen wird insbesondere schon beim Anziehen der Radbolzen gewährleistet, wenn die Büchsen aussenseitig eine Rillung oder Rändelung, bevorzugt an der Auflagefläche insbesondere ihres Flansches insbesondere radial zur Umfangsrichtung aufweisen. Dabei nimmt man in Kauf, dass sich die Rillung oder Rändelung beim Anziehen der Radbolzen insbesondere in den Büchsensitz einpressen. Diese feste Verzahnung zwischen der Rillung oder Rändelung der Büchse mit der Büchsenaufnahmebohrung insbesondere im Bereich des Büchsensitzes wird in aller Regel von den Drehkräften, die auf die Büchsen wirken, nicht mehr überwunden. Sollte die Felge später auf ein anderes Fahrzeug mit anderem Lochkreis verwendet werden, kann die Büchse von hinten mit einem leichten Hammerschlag angehoben und wieder verdreht werden.

Um verschiedene Lochkreise einzustellen, besitzt die Büchse in ihrer Radbolzenbohrung mindestens zum Teil eine Innenkontur zum Verdrehen mittels eines Werkzeuges oder eine Vorrichtung, die z.B. als Sechskantquerschnitt ausgebildet ist. In den Sechskantquerschnitt passt dann ein Imbusschlüssel zum Verdrehen der Büchse.

Desweiteren können auf der Radscheibe zur Büchse benachbart eine Marke und auf dem Rand der Büchse Lochkreismarkierungen insbesondere mit den verschiedenen Lochkreisbezeichnungen für bestimmte Lochkreisradien der Radbolzenbohrungen vorgesehen sein oder umgekehrt auf der Radscheibe die Lochkreismarkierungen Marke auf dem Rand der Büchse. Die Lochkreismarkierungen können Symbole oder auch Zahlen für die zu erzielenden Lochkreisradien sein. Durch entsprechendes Aufeinanderstellen der Markierungen zur Marke wird der gewünschte Lochkreis erreicht.

Wie schon ausgeführt worden ist, sitzt die Büchse bevorzugterweise mit leichtem Passitz bzw. engem Spiel in der Büchsenaufnahmebohrung.

Gegebenenfalls kann eine Überzahl, insbesondere die doppelte oder mehrfache Anzahl von Büchsenaufnahmebohrungen vorgesehen sein, um weitere Lochkreisbereiche abzudecken, also verschiedene Lochkreise zu erfassen; es werden dann nur diejenigen Büchsenaufnahmebohrungen mit Büchsen ausgerüstet, deren Lochkreis gewünscht ist. Die anderen Büchsenaufnahmebohrungen können leer gelassen werden oder aber durch besondere Zierbüchsen abgedeckt werden. Als solche Zierbüchsen kann man Kunststoffbüchsen verwenden, die flaschenkorkenartig in den Büchsenaufnahmebohrungen einzustecken sind. Solche Kunststoff-Zierbüchsen können desweiteren in an sich bekannter Weise metallisiert sein, so dass sie sich von der übrigen Radscheibe nicht mehr unterscheiden. Die Erfindung sei noch im weiteren anhand der Zeichnungen erläutert. Es zeigen:

Figur 1 einen Querschnitt durch ein erfindungsgemässes Felgenrad bei gleichzeitigem Schnitt durch eine Büchsenaufnahmebohrung mit eingesetzter Büchse;

Figur 2 die Draufsicht aus der Blickrichtung A in Figur 1 auf das Felgenrad;

Figur 3 den Querschnitt durch ein Felgenrad entsprechend Figur 1, jedoch mit einer Zentriermutter anstelle eines Zentrier-Innenringes in der Nabenbohrung gemäss Figur 1;

Figur 4 eine Draufsicht aus der Blickrichtung A entsprechend also der Figur 2;

Figur 5 den Querschnitt durch ein Felgenrad im Bereich einer Büchsenaufnahmebohrung mit eingesetzter Büchse;

Figur 6 entsprechend Figur 3, jedoch mit einer anderen Büchsenform und einem Haltering für die Büchse;

Figur 7 entsprechend Figur 5, jedoch mit einer anderen Büchsenform

Figur 8 die Ansicht einer Büchse aus der Blickrichtung B gemäss Figur 9;

Figur 9 den Querschnitt einer Büchse mit einem vollen Hals;

Figur 10 die Ansicht einer Büchse gemäss Figur 11 aus der Blickrichtung C;

Figur 11 den Querschnitt durch eine Büchse mit einem Halsteil, also nicht einem vollen Hals;

Figur 12 die Draufsicht auf eine Büchse in der Radscheibe mit einer Radbolzenbohrung von sechskantförmigem Querschnitt sowie mit Büchsenmarkierungen mit Lochkreisbezeichnungen zu einer Marke auf der Radscheibe;

Figur 13 den Querschnitt zu Figur 12 entlang der Schnittlinie D–E in Figur 12;

Figur 14 die Draufsicht auf eine Büchse mit einer Radbolzenbohrung von sechskantförmigem Querschnitt;

Figur 15 einen Querschnitt einer solchen Büchse gemäss Figur 14 mit einer Nut zur Aufnahme eines Halteringes;

Figur 16 eine Prinzip-Darstellung der Abdeckung verschiedener Lochkreise durch Verdrehen einer Büchse in der Büchsenaufnahmebohrung.

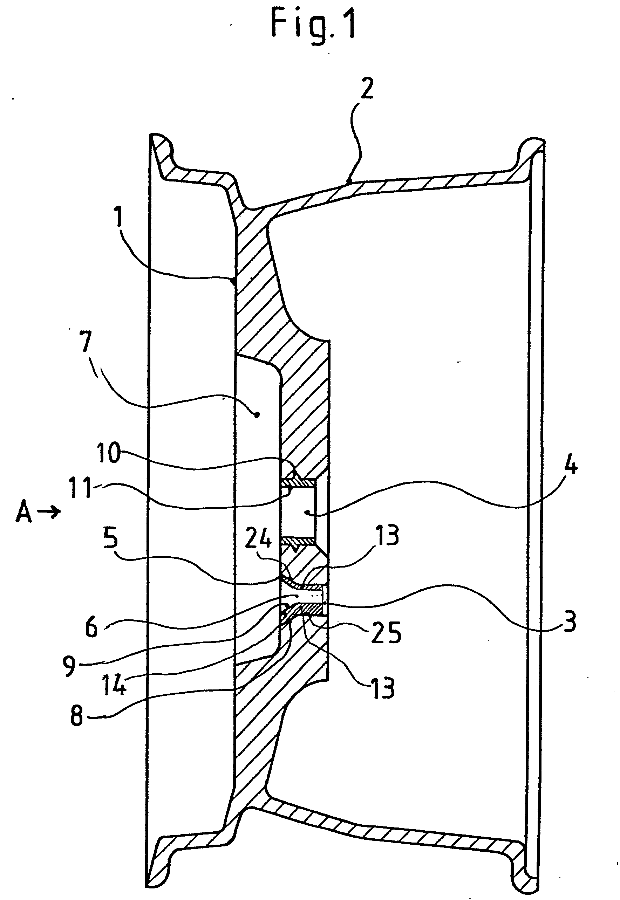

In Figur 1 ist der Querschnitt durch die Rotationsachse der Felge gelegt. Im Zentrum befindet sich die Nabenbohrung 4. Sie ist durch den Innenring 11 verengt. Der Innenring 11 weist aussen einen umlaufenden Wulst auf, der in einer entsprechenden Nut 10 in der Nabenbohrung 4 der Radscheibe 1 angeordnet ist, so dass er sich bei Belastung gegen die Nabe der Radachse nicht aus der Nabenbohrung 4 herausarbeiten kann. Die Radscheibe 1 ist auf der Vorderseite A um die Radscheibenvertiefung 7 ausgespart. Dadurch wird den Köpfen der Radbolzen Raum gegeben, ohne dass sie über die übrige Oberfläche der Radscheibe 1 an der Aussenseite der Felge hervorstehen. Jedoch ist diese Radscheibenvertiefung 7 im Sinne der Erfindung nicht unbedingt notwendig. Auf einem Lochkreis um die Rotationsachse der Felge, also um die Mitte der Nabenbohrung 4, sind in der Radscheibe die Büchsenaufnahmebohrungen 3 angeordnet. Zur Aussenseite A hin sind die Büchsenaufnahmebohrungen 3 in Form eines Büchsensitzes 8 erweitert, so dass hier eine entsprechend erweiterte Büchse 5 ein- bzw. aufgesetzt werden kann. Die Büchse weist einen zu dem Büchsensitz 8 entsprechenden Flansch 14 auf. Dieser liegt auf dem Büchsensitz 8 der erweiterten Öffnung der Büchsenaufnahmebohrung 3 formschlüssig auf, während in das Innere der Büchsenaufnahmebohrung 3 ebenfalls formschlüssig das Halsteil 13 der Büchse ragt. In der Büchse 5 einschliesslich deren Halsteil 13 ist die eigentliche Radbolzenbohrung 6 vorgesehen, in der also der Radbolzen aufgenommen wird. Für den Radbolzen besitzt die Büchse 5 an der Aussenseite eine die Radbolzenbohrung 6 erweiternde Senkfläche 9. In der Figur 1 ist auch zu erkennen, dass das Halsteil 13 der Büchse 5 fast über die gesamte Länge bzw. Tiefe der Büchsenaufnahmebohrung 3 in der Radscheibe 1 erstreckt ist. Dies ist besonders bevorzugt.

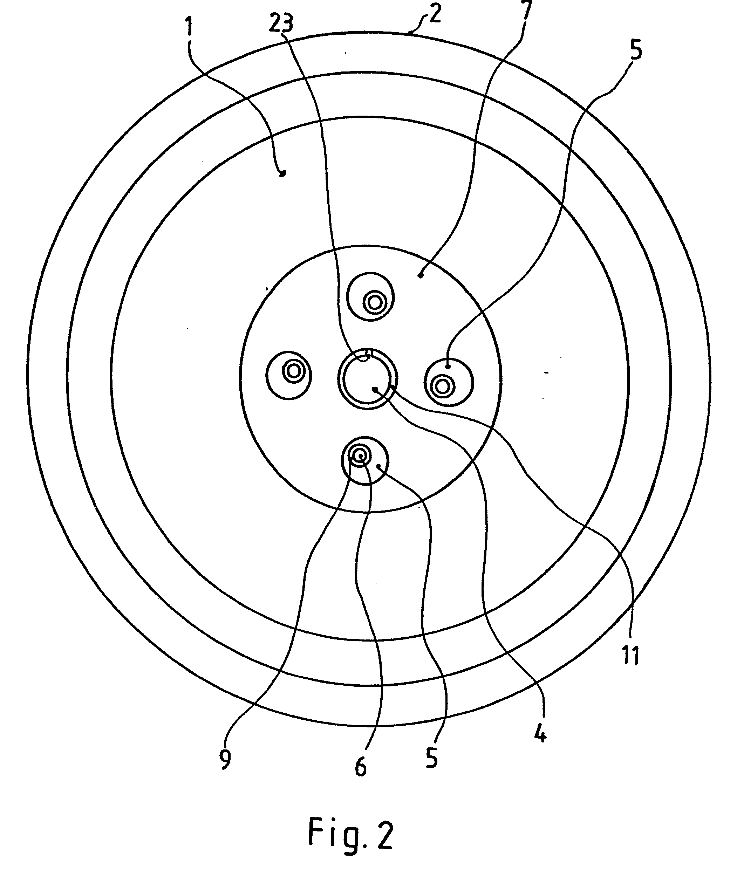

Wie das bei einer Felge von der Aussenseite A aus aussieht, ist in Figur 2 dargestellt. Auf einem Lochkreis sind vier Büchsenaufnahmebohrungen vorgesehen, die jedoch von den in ihnen befindlichen Büchsen 5 verdeckt werden. Die Büchsen 5 sind jeweils bis fast ganz nach innen mit den Radbolzenbohrungen 6 gedreht, so dass also die Radbolzenbohrungen 6 fast auf der zu der Nabenbohrung 4 nächstliegenden Seite der Büchsenaufnahmebohrungen 3 liegen. In der Nabenbohrung 4 ist der verengende Innenring 11 sichtbar. Das Felgenbett 2 ist nur an seinem Rand zu sehen. Ansonsten entsprechen die Bezugszeichen denen der Figur 1.

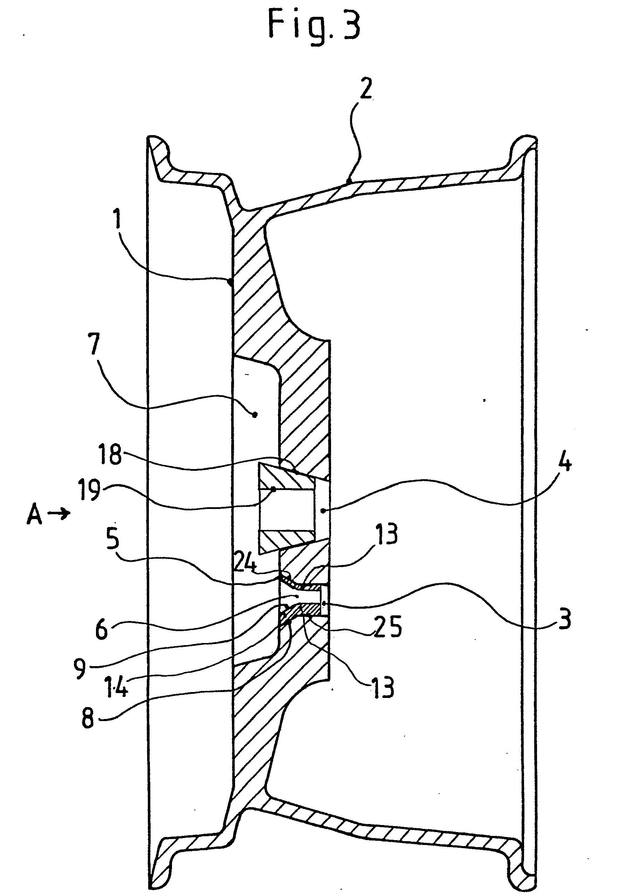

In Figur 3 ist der Querschnitt durch eine Felge gemäss Figur 1 dargestellt. Hier ist jedoch anstelle des Innenringes 11 eine Mutter 19 in einem sich verengenden Gewinde 18 im Zentrum der Radscheibe 1 vorgesehen. Die Nabenbohrung 4 der Radscheibe 1 wird somit von der Innenbohrung der Mutter 19 in der gewünschten Weise verengt. Je weiter die Mutter in dem sich verengenden Gewinde 18 in die Radscheibe 1 hineingedreht wird, desto kleiner wird der Innendurchmesser der Innenbohrung der Mutter 19 werden, da diese Mutter 19 geschlitzt ist. Auch in der Figur 3 ist zu erkennen, dass das Halsteil 13 der Büchse 5 fast die gesamte Länge bzw. Tiefe der Büchsenaufnahmebohrung 3 in der Radscheibe 1 ausfüllt, um die erfindungsgemässe Hebelausgleichswirkung der Büchse 5 zu optimieren.

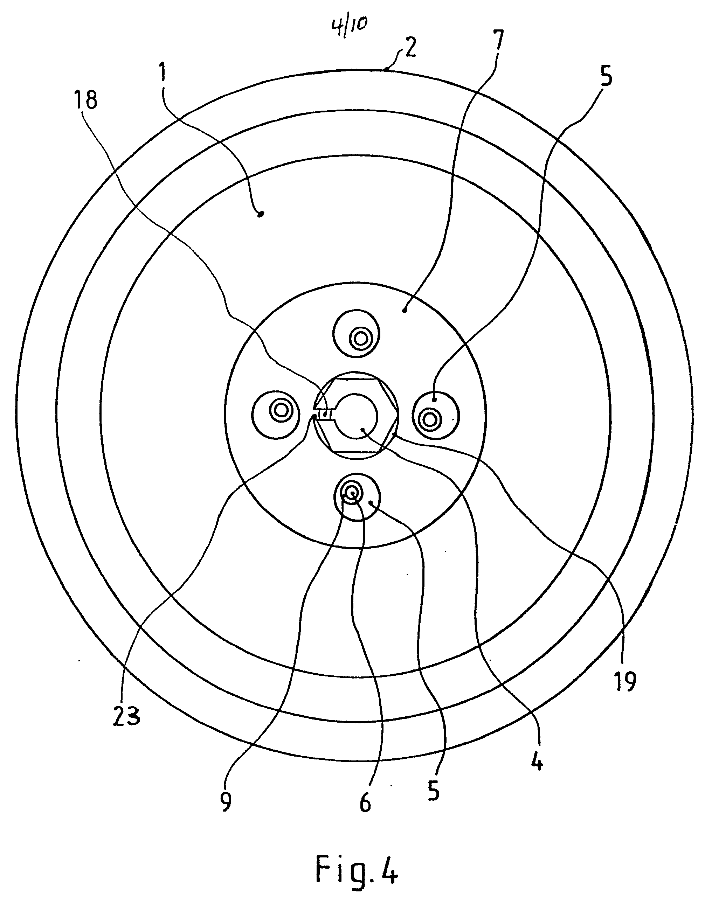

Dass die Mutter 19 geschlitzt ist, ist in Figur 4 zu erkennen, wo die Draufsicht auf eine Felge gemäss Figur 3 aus der Blickrichtung A dargestellt ist. Im Bereich des Schlitzes der Mutter 19 ist ein Stück des sich verengenden Gewindes 18 der Radscheibe 1 zu erkennen. Ansonsten entspricht die Figur 4 der Figur 2. Jedoch ist in Figur 2 der Schlitz des Innenringes 11 mit der eigenen Bezugsziffer 23 gekennzeichnet.

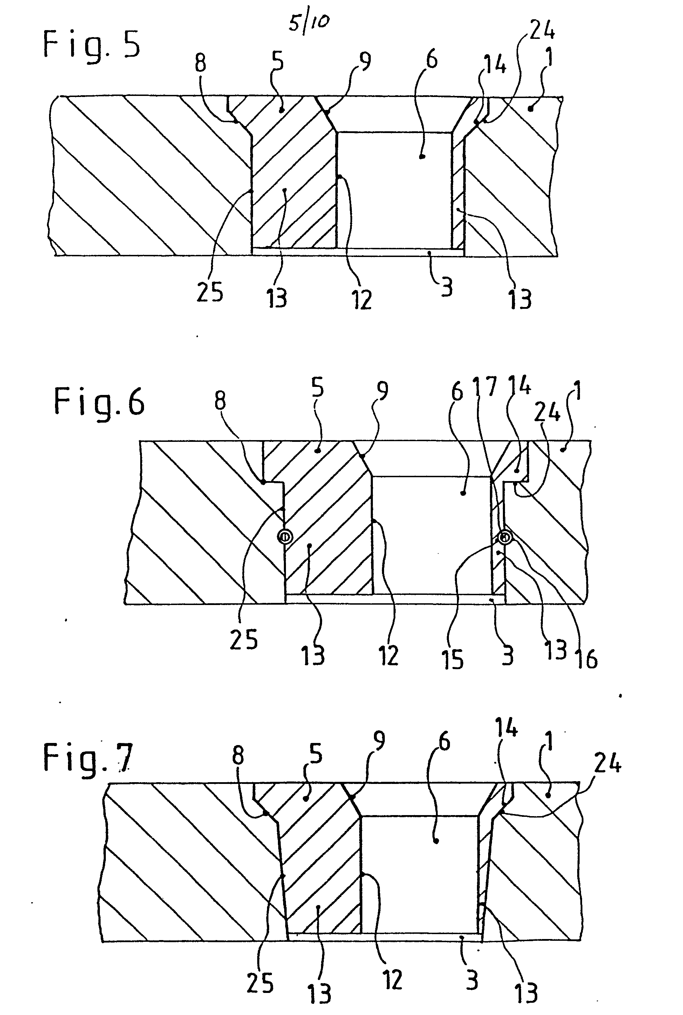

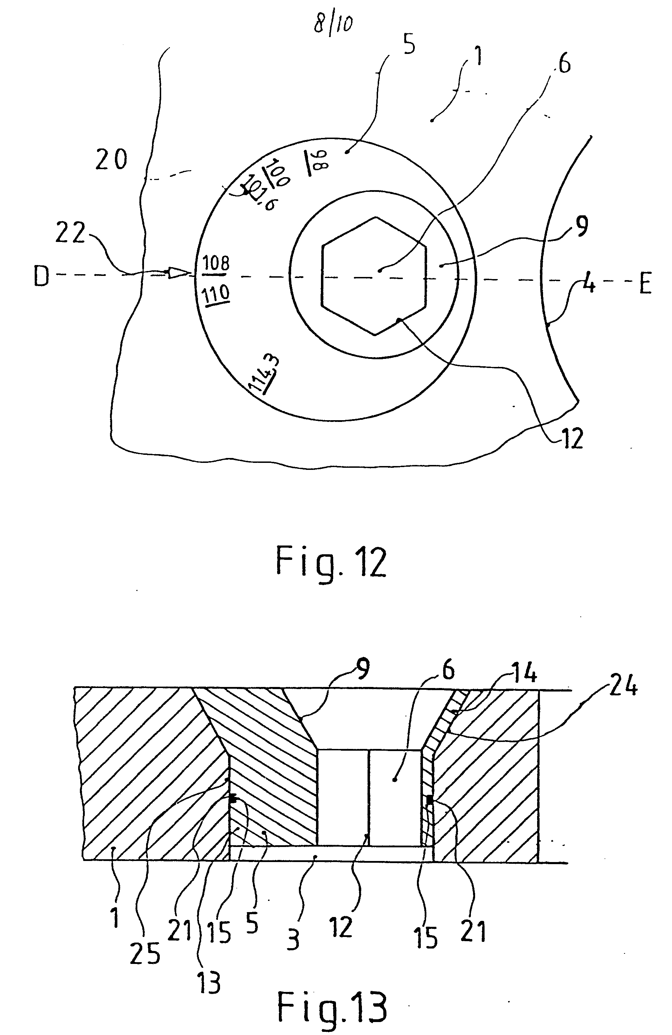

In den Figuren 5 bis 7 ist ein Ausschnitt aus der Radscheibe 1 im Bereich einer Büchsenaufnahmebohrung 3 dargestellt. Allen Büchsenformen gemeinsam ist der Flansch 14, der auf bzw. in den Büchsensitz 8 passt. Ebenfalls besitzen alle dargestellten Büchsen ein volles Halsteil 13, das also die Radbolzenbohrung 6 vollständig umschliesst. In Figur 6 ist eine Ausführungsform dargestellt, bei der zwischen der Radsternplatte 1 und der Büchse 5 ein Haltering 17 vorgesehen ist. Dies ist in dem dargestellten Ausführungsbeispiel so verwirklicht, dass in der Aussenwandung der Büchse 5 im Bereich des Halsteils 13 eine Nut vorgesehen ist, und zu dieser gegebenenfalls gegenüberliegend in der Wandung der Büchsenaufnahmebohrung 3 eine entsprechende Nut 16. Die beiden Nuten 15 und 16 können sich somit zu einem Kanal ergänzen, der Raum für den Haltering 17 gibt. Dieser Haltering 17 kann als Federklemmring, z.B. geschlitzter Draht-Klemmring, ausgebildet sein. Eine andere Ausführungsform zur Verliersicherheit der Büchse 5 wird noch anhand der Figur 13 erläutert werden. In den Figuren 5 bis 7 ist deutlich zu erkennen, wie bzw. dass sich das Halsteil 13 der Büchse 5 fast über die gesamte Länge bzw. Tiefe der Büchsenaufnahmebohrung 3 erstreckt. Vorsichtshalber ist, damit die Büchse 5 nicht aus der Büchsenaufnahmebohrung 3 hervorsteht, das Halsteil 13 gleichwohl etwas kürzer gewählt.

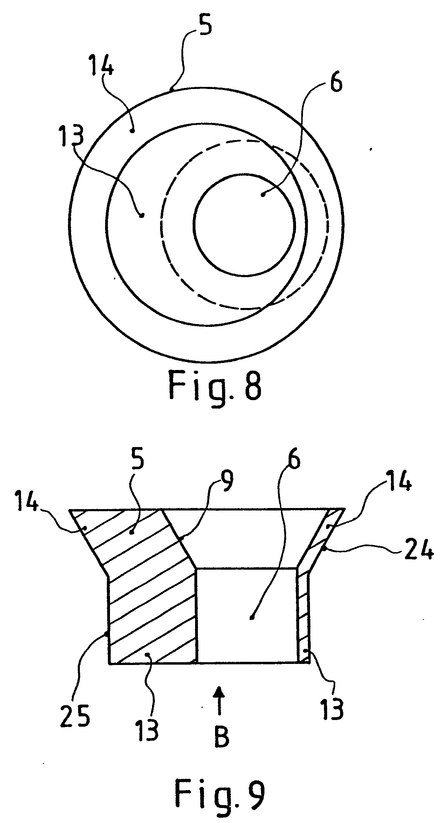

In den Figuren 8 und 9 ist der Querschnitt einer Büchse 5 alleine dargestellt; dazu entsprechend wäre die Büchsenaufnahmebohrung 3 auszubilden. Diese Büchsenform ist besonders bevorzugt; bei ihr ist also der Flansch 14 zentriert ausgebildet, so dass der zu ihr passende Büchsensitz 8 im wesentlichen die Form einer entsprechenden Ansenkung besitzt. Das übrige Halsteil 13 hingegen ist entsprechend der Radbolzenbohrung 3 zylinderförmig ausgebildet. Angemerkt sei noch, dass in Figur 8 die Büchse aus der Blickrichtung B in Figur 9 dargestellt ist.

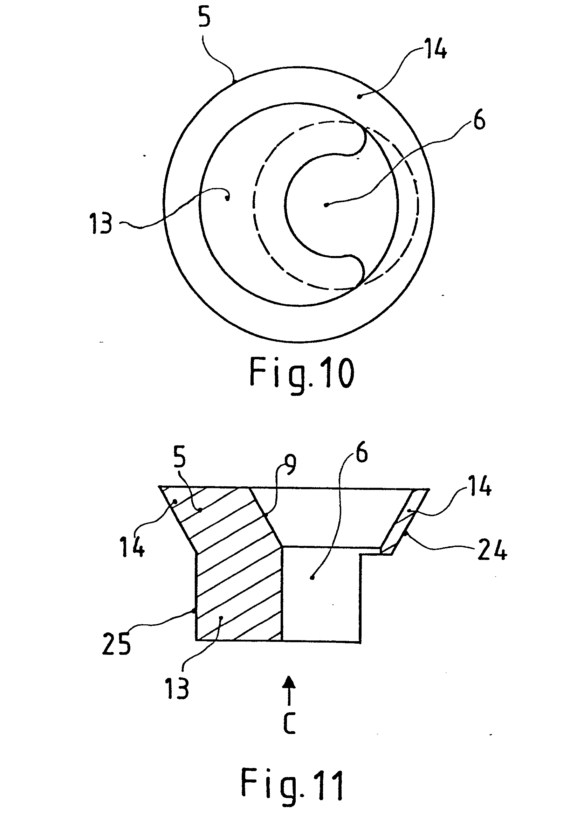

In den Figuren 10 und 11 ist eine Büchse entsprechend den Figuren 8 und 9 dargestellt. Die hier in den Figuren 10 und 11 dargestellte Büchse besitzt jedoch kein volles Halsteil 13 sondern nur ein teilweises Halsteil 13. Das heisst, dass das Halsteil 13 die Radbolzenbohrung 6 nicht vollständig umschliesst. Wesentlich ist jedoch, dass das Halsteil 13 sich mit einer Antikippfläche 25 auf der zu der Radbolzenbohrung 6 gegenüberliegenden Seite, nämlich der hier liegenden Pressfläche 24, der Büchse 5 sich erstreckt, so dass es, wie weiter oben beschrieben, hier einen Gegenhebel zu der genannten Seite der Büchse mit der Radbolzenbohrung 6 bildet. So wird, wie schon beschrieben, wirksam verhindert, dass sich die Büchse im Bereich des Büchsensitzes kippt, weil ohne das Halsteil infolge der aussermittigen Anordnung der Radbolzenbohrung unterschiedliche Hebelarmlängen in der Ebene der Büchsen-Felge zum Tragen kämen.

In Figur 12 ist die Draufsicht wiederum ein Ausschnitt aus der Radscheibe 1 dargestellt im Bereich einer Büchsenaufnahmebohrung, die selbst nicht erkennbar ist, in die jedoch erkennbar eine Büchse 5 eingesetzt ist. Die Radbolzenbohrung 6 in dieser Büchse 5 besitzt nun Sechskant-Querschnitt 12. Somit kann auch eine fest in die Büchsenaufnahmebohrung gepresste Büchse noch mit einem Sechskantschlüssel verdreht werden. Zu der Büchse 5 benachbart ist auf der Radscheibe 1 eine Marke 22 vorgesehen. Auf dem Rand der Büchse 5 sind Lochkreismarkierungen 20 z.B. mit Lochkreisbezeichnungen angeordnet, die in Deckung mit der Marke 22 die Einstellung bestimmter Lochkreisradien für die Radbolzenbohrung 6 anzeigen.

Entlang der Schnittlinie D–E ist in Figur 13 ein Querschnitt zur Figur 12 dargestellt. Hier ist der Haltering als O-Ring 21 ausgebildet, der in der Nut 15 in der Aussenwandung der Büchse 5 gegen die Wandung der Büchsenaufnahmebohrung 3 gepresst ist. Der O-Ring besteht dazu aus Gummi oder einem entsprechenden elastischen Werkstoff, insbesondere Kunststoff.

Auch in dieser Figur 13 ist zu erkennen, wie die Büchse 5 im Ergebnis fast die gesamte Länge bzw. Tiefe der Büchsenaufnahmebohrung 3 formschlüssig ausfüllt.

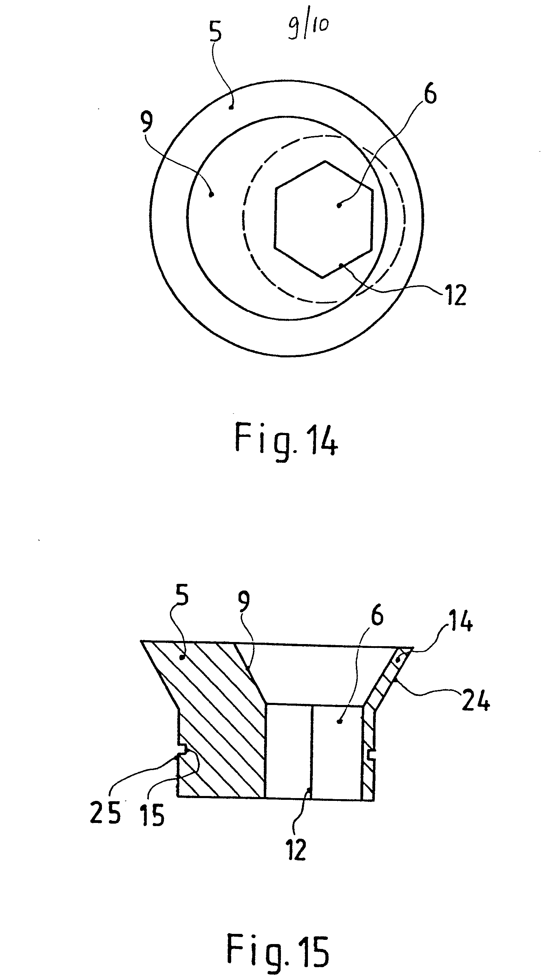

In Figur 14 ist eine Büchse mit einer Radbolzenbohrung 6 von sechskantförmigem Querschnitt 12 einzeln in Draufsicht dargestellt.

In Figur 15 ist ein entsprechender Querschnitt zu Figur 14 dargestellt, in dem insbesondere die Nut 15 zu erkennen ist, in der jedoch kein O-Ring angeordnet ist, damit in dieser Darstellung die Nut 15 deutlich zu erkennen ist.

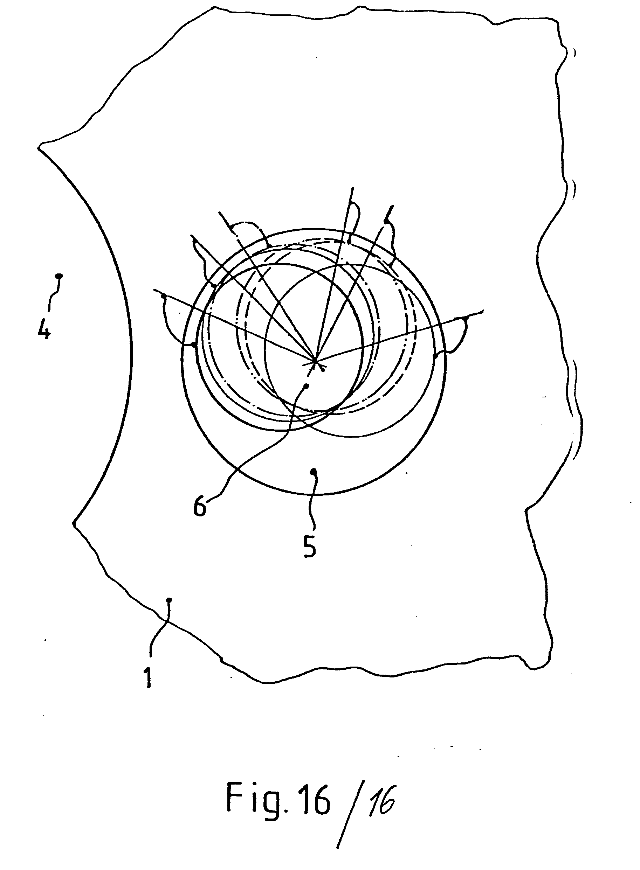

In Figur 16 ist im Prinzip dargestellt, wie durch Drehung der Büchse 5 die Radbolzenbohrung 6 auf verschiedene Lochkreise gegenüber der Nabenbohrung 4 gebracht werden kann. Figur 16 ist demgemäss wiederum eine Draufsicht auf einen Ausschnitt der Radscheibe 1 im Bereich einer Büchse 5.

Zeichenerklärung
1 Radscheibe
2 Felgenbett
3 Büchsenaufnahmebohrung
4 Nabenbohrung
5 Büchse
6 Radbolzenbohrung
7 Radscheibenvertiefung
8 Büchsensitz
9 Senkfläche
10 Nut
11 Innenring
12 Sechskant-Querschnitt
13 Halsteil
14 Flansch
15 Nut
16 Nut
17 Haltering
18 Gewinde
19 Mutter
20 Lochkreismarkierung
21 O-Ring
22 Marke
23 Schlitz
24 Pressfläche
25 Antikippfläche

**Patentansprüche**

1. Felgenrad, insbesondere Scheibenfelgenrad, für Kraftfahrzeuge mit einer Radscheibe (1), die eine zentrale Nabenbohrung (4) und auf einem Lochkreis angeordnete Ausnehmungen (3) aufweist, und mit in den Ausnehmungen (3) eingesetzten Büchsen (5), die jeweils eine Radbolzenbohrung (6) aufweisen und die mit an einem Halsteil (13) sowie an einem erweiterten Büchsensitz (8) angeordneten Anlageflächen an Flächen der Ausnehmungen (3) formschlüssig anliegen, wobei die erweiterten Büchsensitze (8) an der Aussenseite (A), an welcher die Radbolzenmuttern oder dergleichen angeordnet werden, der Radscheibe (1) angeordnet sind, dadurch gekennzeichnet, dass die Anlageflächen vom Halsteil (13) und Büchsensitz (8) jeweils rotationssymmetrisch bezüglich einer durch die Büchsenmitte verlaufenden Achse derart ausgebildet sind, dass die Büchsen (5) in den als Bohrungen (3) ausgebildeten Ausnehmungen drehbar sind, dass die Radbolzenbohrung (6) exzentrisch zu der genannten Achse angeordnet ist, wobei das Halsteil (13) mit dem Bereich (25) der Anlagefläche, welcher bezüglich der Achse auf der anderen Seite als die Radbolzenbohrung (6) liegt, an der Fläche der Bohrung (3) abgestützt wird, und dass in der Nabenbohrung (4) ein mit der Radscheibe (1) verbundenes Zentriermittel vorgesehen ist.

2. Felgenrad nach Anspruch 1, dadurch gekennzeichnet, dass die Büchse (5) mit ihrem Halsteil (13) im wesentlichen über die gesamte Länge bzw. Tiefe der Büchsenaufnahmebohrung (3) formschlüssig erstreckt ist.

3. Felgenrad nach Anspruch 1 oder 2, dadurch gekennzeichnet, dass in der Nabenbohrung (4) als Zentriermittel ein Innenring (11) angeordnet ist.

4. Felgenrad nach Anspruch 3, dadurch gekennzeichnet, dass verschiedene Zentriermittel oder Innenringe (11) zur Vermeidung von Verwechslungen verschiedenfarbig ausgeführt sind.

5. Felgenrad nach Anspruch 3 oder 4, dadurch gekennzeichnet, dass als Innenring (11) eine ein- oder mehrfach geschlitzte Mutter (19) oder ein ein- oder mehrfach geschlitztes Bauteil in beliebiger Ausführung nach dem System einer Spannzange passend in einem sich verengenden Gewinde (18) oder Nuten (10) in der Nabenbohrung (4) angeordnet ist.

6. Felgenrad nach Anspruch 5, dadurch gekennzeichnet, dass sich in einer verengenden Nabenbohrung (4) verschiedene Stufen und/oder Rillen befinden, in die ein Bauteil nach dem Prinzip einer Spannzange eingeklipst oder eingedrückt ist, um kleinere Durchmesser der Nabenbohrung (4) zu erreichen.

7. Felgenrad nach mindestens einem der Ansprüche 1 bis 6, dadurch gekennzeichnet, dass in der Nabenbohrung (4) eine umlaufende Nut (10) vorgesehen ist, zu der der Innenring (11), der geschlitzt ist, einen passenden Aussenwulst besitzt.

8. Felgenrad nach mindestens einem der Ansprüche 1 bis 7, dadurch gekennzeichnet, dass zwischen dem Halsteil (13) und der Büchsenaufnahmebohrung (3) in der Radscheibe (1) ein Haltering (17) angeordnet ist.

9. Felgenrad nach Anspruch 8, dadurch gekennzeichnet, dass der Haltering (17) als Gummi-O-Ring (21) ausgebildet ist, der in einer Nut (15) in der Büchse (5) oder der Büchsenaufnahmebohrung (3) leicht überstehend angeordnet ist.

10. Felgenrad nach mindestens einem der Ansprüche 1 bis 9, dadurch gekennzeichnet, dass die Büchsen (5) aussenseitig bevorzugt an der Auflagefläche, insbesondere ihres Flansches (14) eine Rillung oder Rändelung, insbesondere quer zur Umfangsrichtung aufweisen.

11. Felgenrad nach mindestens einem der Ansprüche 1 bis 10, dadurch gekennzeichnet, dass die Radbolzenbohrung (6) mindestens zum Teil eine Innenkontur zum Verdrehen mittels eines Werkzeuges oder einer Vorrichtung aufweist, die z.B. als Sechskantquerschnitt (12) ausgebildet ist.

12. Felgenrad nach mindestens einem der Ansprüche 1 bis 11, dadurch gekennzeichnet, dass auf der Radscheibe (1) zur Büchse (5) benachbart eine Marke (22) und auf dem Rand der Büchse (5) Lochkreismarkierungen (20) insbesondere mit den verschiedenen Lochkreisbezeichnungen für bestimmte Lochkreisradien der Radbolzenbohrung (6) vorgesehen sind oder umgekehrt die Lochkreismarkierungen (20) auf der Radscheibe (1) und die der Marke (22) auf dem Rand der Büchse (5).

13. Felgenrad nach mindestens einem der Ansprüche 1 bis 12, dadurch gekennzeichnet, dass die Büchse (5) mit leichtem Passitz bzw. einem Spiel in der Büchsenaufnahmebohrung (3) sitzt.

14. Felgenrad nach mindestens einem der Ansprüche 1 bis 13, dadurch gekennzeichnet, dass die Radscheibe (1) die doppelte oder mehrfache Anzahl von Büchsenaufnahmebohrungen (3) besitzt, um weitere Lochkreisbereiche abzudecken.

## Revendications

1. Roue à jante, en particulier roue à jante à disque pour véhicules automobiles, comportant un disque (ou centre, ou voile) de roue (1) présentant un alésage de moyeu central (4) et des évidements (3) disposés sur un cercle de trous, et comportant des douilles (5) introduites dans les évidements (3) qui présentent chacune un alésage de boulon de roue (6) et qui sont en contact avec concordance de forme, par des surfaces de contact disposées sur une section de collet (13), ainsi que sur une section d'assise de douille élargie (8), avec des surfaces des évidements (3), les sections d'assise de douille élargies (8) étant disposées au contact de la face extérieure (A) du disque du roue (1) sur laquelle on place les écrous de boulons de roue ou éléments analogues, caractérisée en ce que les surfaces de contact de la section de collet (13) et de la section d'assise de douille (8) présentent chacune une symétrie de révolution par rapport à un axe passant par le centre de la douille de telle façon que les douilles (5) peuvent tourner dans les évidements réalisés sous la forme d'alésages (3), en ce que l'alésage de boulon de roue (6) est disposé excentriquement par rapport audit axe, la section de collet (13) s'appuyant sur la surface de l'alésage (3) par la zone (25) de la surface de contact qui se trouve de l'autre côté de l'alésage de boulon de roue (6) par rapport à l'axe, et en ce qu'un moyen de centrage relié au disque de roue (1) est prévu dans l'alésage de moyeu (4).

2. Roue à jante selon la revendication 1, caractérisée en ce que la douille (5) s'étend avec concordance de forme, par sa section de collet (13), pratiquement sur toute la longueur ou la profondeur de l'alésage de logement de douille (3).

3. Roue à jante selon la revendication 1 ou 2, caractérisée en ce qu'une bague intérieure (11) est, en tant que moyen de centrage, placée dans l'alésage de moyeu (4).

4. Roue à jante selon la revendication 3, caractérisée en ce que des moyens de centrage différents ou des bagues intérieures différentes (11) sont réalisé(e)s avec des couleurs différentes pour éviter les confusions.

5. Roue à jante selon la revendication 3 ou 4, caractérisée en ce qu'en tant que bague intérieure (11), un écrou (19) à une ou plusieurs fentes ou un composant à une ou plusieurs fentes de conformation quelconque est, selon le système d'une pince de serrage, disposé avec ajustage dans un taraudage (18) se rétrécissant ou des rainures (10) dans l'alésage de moyeu (4).

6. Roue à jante selon la revendication 5, caractérisée en ce que divers gradins et/ou sillons sont présents dans un alésage de moyeu (4) qui se rétrécit, grandins et/ou sillons dans lesquels un composant est accroché ou enfoncé selon le principe d'une pince de serrage, pour obtenir de plus petits diamètres de l'alésage de moyeu (4).

7. Roue à jante selon l'une au moins des revendications 1 à 6, caractérisée en ce qu'il est prévu dans l'alésage de moyeu (4) une rainure périphérique (10) par rapport à laquelle la bague intérieure (11), qui est fendue, comporte un renflement extérieur complémentaire.

8. Roue à jante selon l'une au moins des revendications 1 à 7, caractérisée en ce qu'une bague de retenue (17) est placée dans le disque de roue (1) entre la section de collet (13) et l'alésage de réception de douille (3).

9. Roue à jante selon la revendication 8, caractérisée en ce que la bague de retenue (17) est réalisée sous la forme d'un joint de caoutchouc torique (21) placé en faisant légèrement saillie dans une rainure (15) formée dans la douille (5) ou dans l'alésage de réception de douille (3).

10. Roue à jante selon l'une au moins des revendications 1 à 9, caractérisée en ce que les douilles (5) comportent extérieurement de préférence sur la surface d'appui, en particulier de sa collerette (14), des sillons ou un moletage, en particulier transversalement par rapport à la direction périphérique.

11. Roue à jante selon l'une au moins des revendications 1 à 10, caractérisée en ce que l'alésage de boulon de roue (6) présente au moins en partie un contour intérieur permettant de faire subir une rotation au moyen d'un outil ou d'un dispositif, réalisé, apr exemple, sous la forme d'une section droite hexagonale (12).

12. Roue à jante selon l'une au moins des revendications 1 à 11, caractérisée en ce qu'un repère (22) est prévu sur le disque de roue (1) au voisinage de la douille (5), tandis que des marques de repérage de cercle de trous (20) sont prévues au bord de la douille (5), en particulier avec les différentes désignations de cercles de trous pour des rayons de cercles de trous déterminés de l'alésage de boulon de roue (6), ou bien inversement, les marques de repérage de cercles de trous (20) sont prévues sur le disque de roue (1) et le repère (22) sur le bord de la douille (5).

13. Roue à jante selon l'une au moins des revendications 1 à 12, caractérisée en ce que la douille (5) est placée dans l'alésage de réception de douille (3) avec un ajustement peu serré ou un jeu.

14. Roue à jante selon l'une au moins des revendications 1 à 13, caractérisée en ce que le disque de roue (1) comporte un nombre d'alésages de réception de douilles (3) double ou multiple, pour couvrir d'autres gammes de cercles de trous.

## Claims

1. A wheel rim, in particular a disc wheel rim, for motor vehicles with a wheel disc (1) which has a central hub bore (4) and recesses (3) disposed on a bolt hole circle, and with bushes (5) which are inserted in the recesses (3), which have a respective wheel bolt bore (6) and which with abutment surfaces provided on a neck portion (13) and on a widened bush seating (8) abut in form-locking manner against surfaces of the recesses (3), wherein the widened bush seatings (8) are disposed on the outside (A) of the wheel disc (1), on which the wheel bolt nuts or the like are disposed, characterised in that the abutment surfaces of the neck portion (13) and bush seating (8) are respectively of rotationally symmetrical design in relation to an axis passing through the bush centre such that the bushes (5) can rotate in the recesses formed as bores (3), in that the wheel bolt bore (6) is disposed eccentrically to said axis, in which cas the neck portion (13) is supported with the portion (25) of the abutment surface, which in relation to the axis is situated on the other side to the wheel bolt bore (6), against the surface of the bore (3), and in that a centering means connected with the wheel disc (1) is provided in the hub bore (4).

2. A wheel rim according to Claim 1, characterised in that with its neck portion (13) the bush (5) extends in form-locking manner substantially over the entire length or depth of the bush accommodating bore (3).

3. A wheel rim according to Claim 1 or 2, characterised in that an inner ring (11) is provided as centering means in the hub bore (4).

4. A wheel rim according to Claim 3, characterised in that different centering means or inner rings (11) are differently coloured to avoid confusion.

5. A wheel rim according to Claim 3 or 4, characterised in that as inner ring (11) a singly or multiply slotted nut (19) or a singly or multiply slotted component of any desired design in the manner of a collet is arranged to fit in a tapered thread (18) or grooves (10) in the hub bore (4).

6. A wheel rim according to Claim 5, characterised in that different steps and/or grooves are provided in a tapered hub bore (4), into which a component is clipped or inserted in accordance with the collet principle so as to provide a smaller diameter of the hub bore (4).

7. A wheel rim according to at least one of Claims 1 to 6, characterised in that an annular groove (10) is provided in the hub bore (4), for which the slotted inner ring (11) has a matching outer bead.

8. A wheel rim according to at least one of Claims 1 to 7, characterised in that a retaining ring (17) is provided in the wheel disc (1) between the neck portion (13) and the bush accommodating bore (3).

9. A wheel rim according to Claim 8, characterised in that the retaining ring (17) is in the form of a rubber O-ring (21) which is disposed slightly protruding in a groove (15) in the bush (5) or bush accommodating bore (3).

10. A wheel rim according to at least one of Claims 1 to 9, characterised in that the bushes (5) have, on the outside, preferably on the bearing surface, in particular of their flange (14), a grooved or knurled portion, particularly transversely to the peripheral direction.

11. A wheel rim according to at least one of Claims 1 to 10, characterised in that the wheel bolt bore (6) has at least partly an inner contour for rotation by means of a tool or a device, which is for example in the form of a hexagonal cross-section (12).

12. A wheel rim according to at least one of Claims 1 to 11, characterised in that an index mark (22) is provided on the wheel disc (1) adjacent to the bush (5) and bolt hole circle reference marks (20), in particular with the different hole circle designations for specific hole circle radii of the wheel bolt bore (6), are provided on the edge of the bush (5), or conversely the bolt hole circle markings (20) are provided on the wheel disc (1) an those of the index mark (22) on the edge of the bush (5).

13. A wheel rim according to at least one of Claims 1 to 12, characterised in that the bush (5) is fitted with a light press fit or with clearance in the bush accommodating bore (3).

14. A wheel rim according to at least one of Claims 1 to 13, characterised in that the wheel disc (1) has double or many times the number of bush accommodating bores (3) so as to cover further hole circle ranges.

# Fig.1

Fig. 2

# Fig.3

Fig.4

Fig. 5

8    5    9    6    14  24  1

25    13    12    3    13

Fig. 6

8    5    9    6  17  14  24  1

25    13    12    15    3    13  16

Fig. 7

8    5    9    6    14    1    24

25    13    12    3    13

Fig. 8

Fig. 9

7/10

Fig.10

Fig.11

Fig. 12

Fig.13

9/10

Fig. 14

Fig. 15

10/10

Fig. 16 / *16*